# EUROPÄISCHE PATENTANMELDUNG

(11) **EP 0 838 966 A2**
(43) Veröffentlichungstag der Anmeldung: **29.04.1998**
(21) Anmeldenummer: 97112445.8
(22) Anmeldetag: 21.07.1997
(51) Int. Cl.: H04Q 7/38

(54) **Verfahren und Vorrichtung zur dynamischen Zuweisung einer wechselnden Anzahl von parallelen Kanälen an eine Funkverbindung**

(30) Priorität: 25.10.1996 DE 19644436
(71) Anmelder: KRONE Aktiengesellschaft, 14167 Berlin (DE)
(72) Erfinder: Stadler, Bruno, Dipl.-Ing., 12487 Berlin (DE); Kasimir, Thomas, Dipl.-Ing., 07973 Greiz (DE)

(57) **Zusammenfassung**

Die Erfindung betrifft ein Verfahren zur dynamischen Kanalzuweisung in Funksystemen (1), insbesondere für WLL-Systeme, und Vorrichtungen zur Durchführung des Verfahrens, bei dem sichergestellt wird, daß die dynamische Kanalzuweisung für beide Stationen gleichzeitig wirksam wird.

## Beschreibung

Die Erfindung betrifft ein Verfahren zur dynamischen Kanalzuweisung in Funksystemen, insbesondere für WLL (Wireless Local Loop) - Systeme, und Vorrichtungen zur Durchführung des Verfahrens.

Insbesondere seit dem das Fernmeldemonopol der Post in der Fernmeldetechnik aufgehoben wurde, hat die Bedeutung von Funksystemen in der Kommunikations- und Datentechnik erheblich an Bedeutung zugenommen. Der Grund hierfür liegt darin, daß die privaten Anbieter über kein Leitungsnetz zu den einzelnen Haushalten verfügen. Die Schaffung eines solchen Leitungsnetzes würde aber erhebliche Investitionskosten erfordern, so daß die privaten Anbieter nicht konkurrenzfähig wären. Daher erfolgt die Datenübertragung von einer Basisstation zu den Teilnehmergeräten mittels Funk. Solche Wireless Local Loop (WLL)-Systeme erlauben somit eine zentrale Versorgung von Haushalten ohne entsprechende Schaffung umfangreich verzweigter Leitungssysteme.

In Funksystemen ist eine dynamische Kanalzuweisung zur Anpassung an wechselnde Übertragungsraten erforderlich, da die Anzahl der zur Verfügung stehenden Kanäle stark begrenzt ist. Daher müssen die anfallenden Daten für eine optimale Ausnutzung der zur Verfügung stehenden Kanäle auf die einzelnen Kanäle aufgeteilt werden. Dabei muß das Funksystem flexibel auf Änderungen der Übertragungsraten reagieren können. Die Ursache für wechselnde Übertragungraten können im Datendienst selbst liegen, oder aber aus dem Auf- und Abbau simultaner Verbindungen mit konstanter Datenrate wie z.B. Sprachübertragungen resultieren.

Bei den bekannten Funksystemen, die zwischen Sender und Empfänger in mehreren Kanälen parallel übertragen, werden die anfallenden Daten nach einem bestimmten Algorithmus in die zugewiesenen Kanäle gemappt. Nachteilig an den bekannten Funksystemen ist die mangelnde Synchronisierung der In- oder Außerbetriebnahme von Kanälen in Sender und Empfänger, so daß beim Sender und Empfänger eine geänderte Kanalzuweisung nicht gleichzeitig wirksam wird. Die mangelnde Synchronisierung hat zur Folge, daß der Mappingalgorithmus gestört wird, so daß Datenfehler bei der Übertragung auftreten. Wird dem Empfänger z.B. eine zusätzliche Kanalkapazität zu früh vom Mappingalgorithmus zugeordnet, so kann dies zum Empfang von Pseudodaten führen. Eine zu späte Einbeziehung dieser zusätzlichen Kanalkapazität in den Mappingalgorithmus führt dagegen zu Datenverlusten. Bei der Reduzierung von Kanalkapazitäten verhält es sich gerade umgekehrt, d.h. eine zu frühe Reduzierung führt zu Datenverlusten und eine zu späte Reduzierung kann zum Auftreten von Pseudodaten führen. Bei einer bidirektionalen Übertragung wirkt jeder Sender gleichzeitig als Empfänger, so daß die zuvor beschriebenen Fehler auf jeder Übertragungsseite auftreten können.

Der Erfindung liegt daher das technische Problem zugrunde, ein Verfahren zur dynamischen Kanalzuweisung in Funksystemen und Vorrichtungen zur Durchführung des Verfahrens zu schaffen, bei dem die geänderte Kanalzuweisung für Sender und Empfänger gleichzeitig wirksam wird.

Die Lösung des Problems ergibt sich durch die Merkmale der Patentansprüche 1, 8 und 11. Durch die Festlegung einer beteiligten Station als Master, der aus der Datentransferlast neue Kanal- und Vebindungstabellen ableitet und diese an Master und Slave übergibt, wird das System in einen Erwartungszustand versetzt, wobei die Definition des Masters bei einer Duplex-Funkübertragungsstrecke unabhängig von der initierenden Stelle erfolgen kann. Durch Aussenden eines Umkonfigurierungssignals vom Master an den Slave und Quittierung des Empfangs durch den Slave findet die endgültige Vornahme der Umkonfiguration statt, wobei die Umkonfigurierungs- und Quittierungssignale vom Mappingalgorithmus jeweils ignoriert werden. Dabei überlappen sich das Umkonfigurierungs- und das Quittungssignal zeitlich mit Zuweisungs- oder Entzugsprozeduren für die Kanäle auf der Seite des Masters (2) und des Slaves (3), wodurch Datenverluste oder die Einkoppelung von Pseudodaten vermieden werden.

Weitere vorteilhafte Ausgestaltungen der Erfindung ergeben sich aus den Unteransprüchen. In einer weiteren Ausführungsform existiert in der Mappingbaugruppe des Masters für jeden aktiven Slave genau eine virtuelle Verbindungsbaugruppe und in der Mappingbaugruppe des Slaves auch genau eine virtuelle Verbindungsbaugruppe. Durch den zusätzlichen Verfahrensschritt zu überprüfen, ob die geforderten Kanäle verfügbar oder die Verbindungskapazität ausreichend ist, wird sichergestellt, daß nicht eine physikalisch unmögliche Konfiguration beim Master oder den Slaves eingestellt wird. Bei Zuweisung oder Entzug mehrerer Kanäle können die gleichen Verfahren parallel durchgeführt werden. Beim Ausbleiben erwarteter Signale können der Master oder der Slave nach einer voreinstellbaren Anzahl von Zyklen oder Zeit wieder in den Ausgangszustand zurückkehren, so daß verhindert wird, daß sich das System über einen längeren Zeitraum in einem instabilen Zustand befindet.

Bei einer weiteren Ausführungsform und der Anweisung zur Reduzierung der Kanalkapazität wird der außer Betrieb zu nehmende Kanal masterseitig in Senderichtung aus dem Mappingalgorithmus herausgenommen, während dieser in Empfangsrichtung eingebunden bleibt. Auf der Seite des Slaves bleibt der betreffende Kanal in den Mappingalgorithmus eingebunden. Über den außer Betrieb zu nehmenden Kanal kann der Master dann das Umkonfigurierungssignal an den Slave senden. Nach Empfang des Umkonfigurierungssignals sendet der Slave ein Quittierungssignal an den Master und entbindet den Kanal sende- und empfangsseitig aus dem Mappingalgorithmus. Nach Empfang des Quittierungssignals entbindet der Master dann den Kanal auch empfangseitig aus dem Mappingalgorithmus.

Bei einer Zuweisung von Kanalkapazität wird der neu zugewiesene Kanal auf Seiten des Masters in Sende- und Empfangsrichtung aktiviert, ohne jedoch vom Mappingalgorithmus berücksichtigt zu werden. Auf der Seite des Slaves wird der neu einzurichtende Kanal in Senderichtung gesperrt und in Empfangsrichtung aktiviert, ohne vom Mappingalgorithmus berücksichtigt zu werden. Vom Master kann dann auf dem Kanal ein Umkonfigurierungssignal an den Slave gesendet werden. Nach Empfang des Umkonfigurierungssignals sendet der Slave über den neu zugewiesenen Kanal ein Quittierungssignal an den Master und in Empfangsrichtung wird der Kanal auf der Seite des Slaves vom Mappingalgorithmus berücksichtigt. Nach Empfang des Quittierungssignals durch den Master kann dann der neu eingerichtete Kanal sende- und empfangseitig in den Mappingalgorithmus des Masters eingebunden werden und mit der Nutzdatensendung begonnen werden. Nach Empfang der ersten Nutzdaten wird der neu zugewiesene Kanal vom Slave auch sendeseitig in den Mappingalgorithmus eingebunden.

Zur Durchführung des Verfahrens dient z.B. eine als Master fungierende Basisstation mit einem mit dem Fernmeldenetz verbundenen bidirektionalen Interface, das mit einer Mappingbaugruppe verbunden ist. Funkseitg ist die Mappingbaugruppe über einen Datenbus mit einer RF-Baugruppe verbunden ist, wobei die Mappingbaugruppe durch einen mit dem bidirektionalen Interface verbundenen Protokollcontroller angesteuert wird. In einer weiteren Ausführungsform wird die Mappingbaugruppe netzseitig durch einen Multiplexer und funkseitig durch virtuelle Verbindungsbaugruppen gebildet. Das als Slave fungierende Teilnehmergerät umfaßt eine Mappingbaugruppe, die funkseitig mit einer am Eingang des Teilnehmergerätes angeordneten RF-Baugruppe verbunden ist. Teilnehmerseitig ist die Mappingbaugruppe mit den jeweiligen Endgeräten der Teilnehmer verbunden. In einer weiteren Ausführungsform kann die Mappingbaugruppe funk-seitig durch eine virtuelle Verbindungsbaugruppe und teilnehmerseitig durch einen Multiplexer gebildet werden.

Die Erfindung wird nachfolgend anhand eines bevorzugten Ausführungsbeispieles näher erläutert. Die Fig. zeigen:
- Fig. 1:: ein Blockschaltbild des Funksystems,
- Fig. 2:: ein Schichtenmodell des Funksystems,
- Fig. 3:: einen Zustandsautomaten für eine Basisstation bei Zuweisung von Kanälen,
- Fig. 4:: einen Zustandsautomaten für ein Teilnehmergerät bei Zuweisung von Kanälen,
- Fig. 5:: eine Zustandsautomaten für die Basisstation bei Reduzierung von Kanälen und
- Fig. 6:: einen Zustandsautomaten für das Teilnehmergerät bei Reduzierung von Kanälen.

Das Funksystem 1 umfaßt eine Basisstation 2 und mehrere unabhängige Teilnehmergeräte 3. Die Basisstation 2 umfaßt ein mit dem Fernmeldenetz verbundenes bidirektionales Interface 4, einen Protokollcontroller 5, eine Mappingbaugruppe 6, einen Datenbus 7 und eine Radio-Frequency (RF)-Baugruppe 8 mit einer Luftschnittstelle 9. Die Mappingbaugruppe 6 umfaßt einen Multiplexer 10 und eine Vielzahl virtueller Verbindungsbaugruppen 11. Die Teilnehmergeräte 3 umfassen eine Radio-Frequency (RF)-Baugruppe 12 und eine Mappingbaugruppe 13. Die Mappingbaugruppe 13 des Teilnehmergerätes 3 umfaßt ähnlich wie die Mappingbaugruppe 6 der Baisstation 2 einen Multiplexer 14 und eine virtuelle Verbindungsgruppe 15. Teilnehmerseitig ist der Multiplexer 14 mit Teilnehmerinterfaceschaltungen 16 von angeschlossenen Endgeräten verbunden. Der Protokollcontroller 5 ist bidirektional mit dem bidirektionalen Interface 4 verbunden. Des weiteren ist ein Signalausgang des Protokollcontrollers 5 mit den Steuereingängen des Multiplexers 10 und der virtuellen Verbindungsgruppe 11 verbunden. Über den Datenbus 7 ist die RF-Baugruppe 8 funkseitig mit den virtuellen Verbindungsbaugruppen 11 der Mappingbaugruppe 6 verbunden. Die mit einer Luftschnittstelle 17 ausgeführte RF-Baugruppe 12 des Teilnehmergerätes 3 ist mit der virtuellen Verbindungsbaugruppe 15 der Mappingbaugruppe 13 verbunden.

Die Basisstation 2 ist im dargestellten Funksystem 1 in Relation zu den Teilnehmergeräten 3 die höhere Hierarchieebene und übernimmt deshalb die Funktion des Masters. Die vom Fernmeldenetz z.B. ankommenden Daten liegen über das bidirektionale Interface 4 an den Dateneingängen des Multiplexers 10 der Mapping-Baugruppe 6 an. Der Protokollcontroller 5 leitet aus den Daten entsprechende Steuerungssignale für den Multiplexer 10 und die virtuellen Verbindungsbaugruppen 11 der Mapping-Baugruppe 6 ab. Der Multiplexer 10 ordnet die Datenströme für ein jeweils aktives Teilnehmergerät 3 einer der virtuellen Verbindungsbaugruppen 11 ohne spezielle Identifikation der Einzelverbindungen des Teilnehmergerätes zu. Eine derartige Verbindungsbaugruppe 11 wird generiert und bleibt bestehen, so lange das Teilnehmergerät 3 aktiv ist. Die virtuelle Verbindungsbaugruppe 11 korreliert mit der jeweiligen virtuellen Verbindungsbaugruppe 15 der Mapping-Baugruppe 13 des Teilnehmergerätes 3. Die Daten werden dabei von der virtuellen Verbindungsbaugruppe 11 über den Datenbus 7 an die RF-Baugruppe 8 weitergeleitet und über die Luftschnittstelle 9 an die Luftschnittstelle 17 der RF-Baugruppe 12 des jeweiligen Teilnehmergerätes 3 übertragen. Die RF-Baugruppe 12 leitet die empfangenen Daten an die virtuelle Verbindungsbaugruppe 15 weiter. Die Daten liegen anschließend am Eingang des Multiplexers 14 an, von wo aus diese durch den Multiplexer 14 an die jeweils aktiven Endgeräte der Teilnehmer multiplext werden.

Die Anforderung zur dynamischen Kanalzuweisung wird vom Protokollcontroller 5 ausgelöst. Das Steuersignal des Protokollcontrollers 5 steuert den Multiplexer 10 und die virtuellen Verbindungsbaugruppen 11 an. Diese Steuerung beinhaltet für den Multiplexer 10 die Übergabe einer aktualisierten Verbindungstabelle. Die Verbindungstabelle beinhaltet, welche aktiven Teilnehmerverbindungen einer bestimmten virtuellen Verbindungsbaugruppe 11 zuzuordnen sind. Die Steuerung beinhaltet weiter für die virtuellen Verbindungsbaugruppen 11 die Übergabe einer aktualisierten Kanaltabelle. Die Kanaltabelle beinhaltet, welche Kanäle für die Übertragung der Daten zu nutzen sind. Des weiteren wird zur dynamischen Kanalzuweisung vom Protokollcontroller 5 die Steuerung der virtuellen Verbindungsbaugruppe 15 und des Multiplexers 14 im Teilnehmergerät 3 vorgenommen. Diese Steuerung beinhaltet für die virtuelle Verbindungsbaugruppe 15 die Übergabe einer aktualisierten Kanaltabelle, die mit der Kanaltabelle der virtuellen Verbindungsbaugruppe 11 der Basisstation 2 übereinstimmt. Die Steuerung des Multiplexers 14 erfolgt durch die Übergabe einer aktualisierten Teilnehmerverbindungstabelle, die beinhaltet, welche Verbindung welcher der Teilnehmerinterfaceschaltungen 16 zuzuordnen ist. Die Übertragung der Steuerung zum Teilnehmergerät 3 erfolgt bei einem aktiven Teilnehmergerät 3 über den oder die bereits eingerichteten Kanäle. Sofern noch keine eingerichteten Kanäle vorhanden sind, wird über einen Organisationskanal an das Teilnehmergerät 3 die Anweisung zur Generierung einer virtuellen Verbindungsbaugruppe 15 und eine verkürzte Kanaltabelle, die nur einen Kanal enthält, übertragen. Entsprechend der nachfolgend näher erläuterten Prozedur zur dynamischen Kanalzuweisung werden über diesen Kanal alle Steuerungsanweisungen übertragen und gegebenenfalls noch weitere Kanalzuweisungen durchgeführt. Die virtuellen Verbindungsbaugruppen 11, 15 nutzen die bereitgestellten Kanäle als Gesamtkapazität, die nicht teilnehmerbezogen gesplittet wird. Zu diesem Zweck existiert ein Mappingalgorithmus, nach welchem die seriell von den Multiplexern 10, 14 eingehenden Daten ohne Bezug auf die Teilnehmerverdingungen in die Kanäle gemappt werden bzw. nach welchen in der Gegenrichtung zu den Multiplexern 10, 14 das Mapping rückgängig zu machen und wieder ein serieller Datenstrom zu generieren ist.

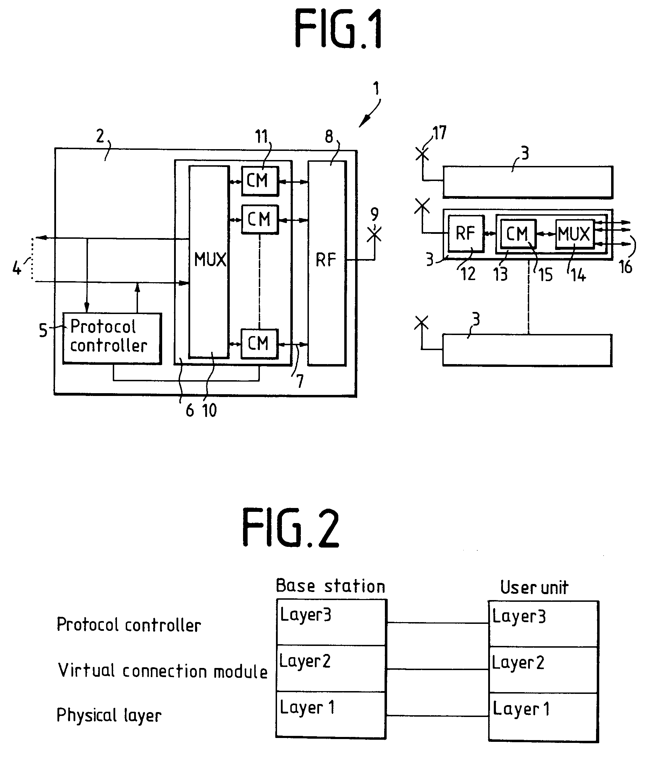

In der Fig. 2 ist das Funksystem 1 als Schichtenmodell dargestellt. Der Protokollcontroller 5 der Basisstation 2 ist Instanz der Schicht 3 und leitet aus den Signalisierungen zu Aufbau und Abbau von Verbindungen die Notwendigkeit zur Veränderung von Übertragungskapazitäten ab. Als Ergebnis werden die Anweisungen zur dynamischen Kanalzuweisung an die virtuellen Verbindungsbaugruppen 11 der Basisstation 2 und die virtuellen Verbindungsbaugruppen 15 der Teilnehmergeräte 3 abgeleitet. Die virtuellen Verbindungsbaugruppen 11, 15 realisieren Aufgaben der Schicht 2 und zum Teil der Schicht 1.

Der Prozeß der dynamischen Kanalzuweisung wird nachfolgend anhand von Zustandsautomaten, die Bestandteil der virtuellen Verbindungsbaugruppen 11, 15 sind, detailliert beschrieben.

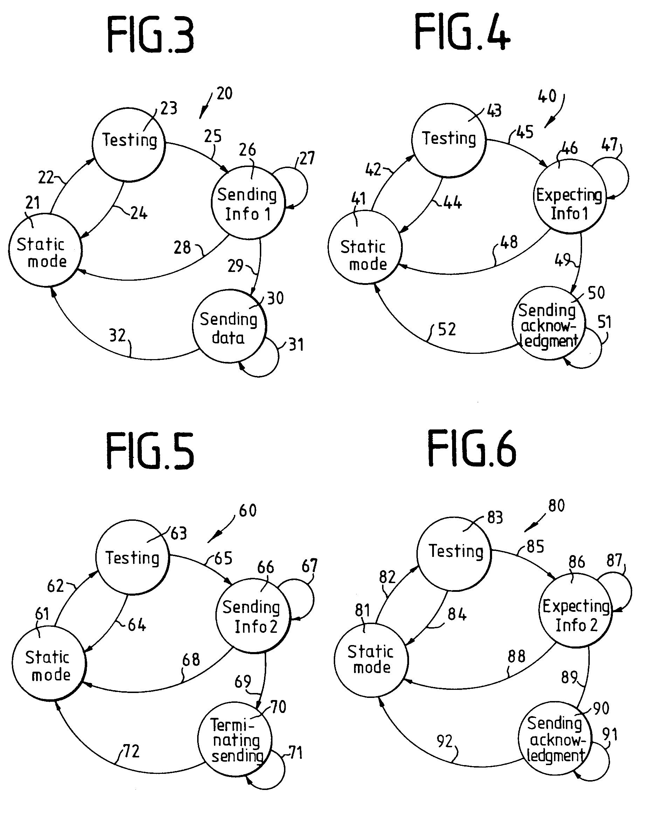

In der Fig. 3 ist der Zustandsautomat 20 für eine virtuelle Verbindungsbaugruppe 11 der Basisstation 2 für den Fall der Zuweisung von Kanalkapazität dargestellt. Der statische Betrieb 21 beinhaltet die Nutzung von 0 ≤ n ≤ nₘₐₓ Kanälen zwischen der Basisstation 2 als Master und dem Teilnehmergerät 3 als Slave. Im Fall von n > 0 werden die Daten entsprechend des Mappingalgorithmus über die zugewiesenen und eingerichteten Kanäle übertragen. Dabei kann n Werte zwischen Bruchteilen eines Kanals bis nₘₐₓ >>1 annehmen. Mit der Anweisung zur Erhöhung der Kanalkapazität 22, enthalten in der vom Protokollcontroller 5 übergebenen Kanaltabelle, erfolgt der Übergang zum Zustand Prüfen der Anweisung 23. Die angewiesene Erhöhung der Kanalkapazität 22 kann Werte von mₘᵢₙ ≤ m ≤ 1 annehmen. Ist die geforderte Erhöhung der Kanalkapazität 22 größer als 1 Kanal, so werden mehrere Zustandsautomaten 20 parallel wirksam. Ein negatives Prüfungsergebnis 24 führt, wenn der zugewiesene Kanal nicht verfügbar ist oder die Kapazität der virtuellen Verbindungsbaugruppe 11 überschritten werden würde, wieder zum statischen Betrieb 21 mit den Ausgangsparametern. In diesen Fällen wird ein Alarmindikationssignal an den Protokollcontroller 5 gesendet. Bei positivem Prüfungsergebnis 25 erfolgt der Übergang zum Zustand Phase 1 der dynamischen Kanalzuweisung 26. Der Zustand Phase 1 der dynamischen Kanalzuweisung 26 beinhaltet, daß in dem neu zugewiesenen Kanal Senden und Empfangen aktiviert wird, der Kanal aber noch nicht mit bereits einge-richteten Kanälen gemeinsam entsprechend dem Mappingalgorithmus genutzt wird. In der Senderichtung wird in dem einzurichtenden Kanal eine als Umkonfigurierungssignal wirkende Zuweisungsinformation (Info 1) an das Teilnehmergerät 3 ausgesendet. In der Empfangsrichtung wird eine Quittung für die Zuweisungsinformation (Info 1) erwartet. Der Zustand Empfang ohne Quittung 27 führt wieder zum Zustand Phase 1 der dynamischen Kanalzuweisung 26 und erneutem Aussenden einer Zuweisungsinformation (Info 1). Es kann ein Übergang 28 zum statischen Betrieb 21 mit den Ausgangsparametern erfolgen, wenn für eine voreinstellbare Anzahl von Zyklen oder eine voreinstellbare Zeit keine Quittung eingetroffen oder eine eingetroffene Quittung ungültig ist. In diesen Fällen wird eine Alarmindikationssignal an den Protokollcontroller 5 gesendet. Das Eintreffen einer Quittung 29 führt zum Zustand Phase 2 der dynamischen Kanalzuweisung 30. Der Zustand Phase 2 der dynamischen Kanalzuweisung 30 beinhaltet, daß der neu zugewiesene Kanal mit den bereits eingerichteten Kanälen gemeinsam entsprechend dem Mappingalgorithmus genutzt wird. In der Senderichtung wird mit der Nutzdatensendung begonnen. In der Empfangsrichtung wird das Ausbleiben der Quittung erwartet. Der Empfang mit Quittungen 31 führt wieder zum Zustand Phase 2 der dynamischen Kanalzuweisung 30. Die Quittungen werden vom Mappingalgorithmus ignoriert. Mit dem Ausbleiben der Quittungen 32 erfolgt der Übergang zum statischen Betrieb 21 mit den neuen Parametern.

In der Fig. 4 ist der Zustandsautomat 40 für die virtuelle Verbindungsbaugruppe 15 des Teilnehmergeräts 3 für den Fall der Zuweisung von Kanalkapazität dargestellt. Der Zustand statischer Betrieb 41 beinhaltet die Nutzung von 0 ≤ n ≤ nₘₐₓ Kanälen zwischen der Basistation 2 als Master und dem Teilnehmergerät 3 als Slave. Im Falle n > 0 werden Daten entsprechend des Mappingalgorithmus über die zugewiesenen und eingerichteten Kanäle übertragen. Dabei kann n Werte zwischen Bruchteilen eines Kanal bis nₘₐₓ » 1 annehmen. Mit der Anweisung zur Erhöhung der Kanalkapazität 42, enthalten in der vom Protokollcontroller 5 übergebenen Kanaltabelle, erfolgt der Übergang zum Zustand Prüfen der Anweisung 43. Die angewiesene Erhöhung der Kanalkapazität 42 kann Werte von mₘᵢₙ ≤ m ≤ 1 annehmen. Ist die geforderte Erhöhung der Kanalkapazität 42 größer als 1 Kanal, so werden mehrere Zustandsautomaten 40 parallel wirksam. Ein negatives Prüfungsergebnis 44, wenn die maximale Übertragungskapazität des Teilnehmergerätes 3 überschritten würde, führt wieder zum statischen Betrieb 41 mit den Ausgangsparametern. In diesem Fall wird ein Alarmindikationssignal an den Protokollcontroller 5 gesendet. Bei positivem Prüfungsergebnis 45 erfolgt der Übergang zum Zustand Phase 1 der dynamischen Kanalzuweisung 46. Der Zustand Phase 1 der dynamischen Kanalzuweisung 46 beinhaltet, daß in der Senderichtung der einzurichtende Kanal gesperrt und Empfangen aktiviert ist und eine Zuweisungsinformation (Info 1) erwartet wird. Der Kanal wird noch nicht mit bereits eingerichteten Kanälen gemeinsam entsprechend dem Mappingalgorithmus genutzt. Der Empfang ohne Zuweisungsinformation 47 (Info 1) führt wieder zum Zustand Phase 1 der dynamischen Kanalzuweisung 46. Es kann ein Übergang 48 zum statischen Betrieb 41 mit den Ausgangsparametern erfolgen, wenn für eine voreinstellbare Anzahl von Zyklen oder eine voreinstellbare Zeit keine Zuweisungsinformation (Info 1) eingetroffen oder eine eingetroffene Zuweisungsinformation ungültig ist. In diesen Fällen wird ein Alarmindikationssignal an den Protokollcontroller 5 gesendet. Das Eintreffen einer Zuweisungsinformation 49 führt zum Zustand Phase 2 der dynamischen Kanalzuweisung 50. Der Zustand Phase 2 der dynamischen Kanalzuweisung 50 beinhaltet, daß eine Quittung an die Basisstation 2 gesendet und die Empfangsrichtung gemeinsam mit den bereits eingerichteten Kanälen entsprechend dem Mappingalgorithmus genutzt wird. Der Empfang weiterer Zuweisungsinformationen 51 führt wieder zum Zustand Phase 2 der dynamischen Kanalzuweisung 50 und erneutem Aussenden einer Quittung. Die Zuweisungsinformationen werden beim Mappingalgorithmus ignoriert. Das Ausbleiben einer weiteren Zuweisungsinformation 52 führt zum statischen Betrieb 41 mit den neuen Betriebsparametern. Damit wird gewährleistet, daß bei der Zuweisung von Kanälen nicht vor Beginn einer Nutzdatensendung in einem Empfänger Pseudodaten in das Mapping einbezogen werden und der Beginn der Nutzdatensendung definiert ohne Datenverlust in das Mapping einbezogen ist.

In der Fig. 5 ist der Zustandautomat 60 für eine virtuelle Verbindungsgruppe 11 der Basisstation 2 für den Fall des Entzugs von Kanalkapazität dargestellt. Der statische Betrieb 61 beinhaltet die Nutzung von nₘᵢₙ ≤ n ≤ nₘₐₓ Kanälen zwischen der Baisstation 2 und dem Teilnehmergerät 3. Die Daten werden entsprechend des Mappingalgorithmus über die zugewiesenen und eingerichteten Kanäle übertragen. Mit der Anweisung zum Entzug von Kanalkapazität 62, enthalten in der vom Protokollcontroller 5 übergebenen Kanaltabelle, erfolgt der Übergang zum Zustand Prüfen der Anwei-sung 63. Ist die geforderte Reduzierung der Kanalkapazität größer als 1 Kanal, so werden mehrere Zustandsautomaten 60 parallel wirksam. Ein negatives Prüfungsergebnis 64, wenn für das Verfahren nicht unmittelbar relevante Plausibilitätsprüfungen dies begründen, führt wieder zum statischen Betrieb 61 mit den Ausgangsparametern. In diesem Fall wird ein Alarmindikationssignal an den Protokollcontroller 5 gesendet. Ein positives Prüfungsergebnis 65 führt zum Zustand Phase 1 der dynamischen Kanalzuweisung 66. Der Zustand Phase 1 der dynamischen Kanalzuweisung 66 beinhaltet, daß in dem außer Betrieb zu nehmenden Kanal die Senderichtung nicht mehr entsprechend dem Mappingalgorithmus genutzt wird. In der Senderichtung wird in dem außer Betrieb zu nehmenden Kanal eine Entzugsinformation (Info 2) gesendet. In der Empfangsrichtung bleibt der Kanal in den Mappingalgorithmus eingebunden. Es wird eine Quittung für die Entzugsinformation erwartet, die beim Mappingalgorithmus ignoriert wird. Der Empfang ohne Quittung 67 führt wieder zum Zustand Phase 1 der dynamischen Kanalzuweisung 66. Es wird erneut eine Entzugsinformation gesendet. Es kann ein Übergang 68 zum statischen Betrieb 61 mit den Ausgangsparametern erfolgen, wenn für eine voreinstellbare Anzahl von Zyklen oder eine voreinstellbare Zeit keine Quittung eingetroffen oder eine eingetroffene Quittung ungültig ist. In diesen Fällen wird ein Alarmindikationssignal an den Protokollcontroller 5 gesendet. Das Eintreffen einer Quittung 69 führt zum Zustand Phase 2 der dynamischen Kanalzuweisung 70. Der Zustand Phase 2 der dynamischen Kanalzuweisung 70 beinhaltet, daß der außer Betrieb zu nehmende Kanal sendeseitig außer Betrieb genommen wird. Ein weiterer Empfang mit Quittung 71 führt wieder zum Zustand Phase 2 der dynamischen Kanalzuweisung 70. Eingehende Quittungen werden beim Mappingalgorithmus ignoriert. Das Ausbleiben von Quittungen 72 führt zum statischen Betrieb 61 mit den neuen Parametern.

In der Fig. 6 ist der Zustandsautomat 80 für eine virtuelle Verbindungsbaugruppe 15 des Teilnehmergerätes 3 für den Fall der Reduzierung von Kanalkapazität dargestellt. Der statistische Betrieb 81 beinhaltet die Nutzung von nₘᵢₙ ≤ n ≤ nₘₐₓ Kanälen zwischen der Basisstation 2 und dem Teilnehmergerät 3. Die Daten werden entsprechend des Mappingalgorithmus über die zugewiesenen und eingerichteten Kanälen übertragen. Mit der Anweisung zur Reduzierung der Kanalkapazität 82, enthalten in der vom Protocollcontroller 5 übergebenen Kanaltabelle, erfolgt der Übergang zum Zustand Prüfen der Anweisung 83. Die angewiesene Reduzierung der Kanalkapazität kann Werte von mₘᵢₙ ≤ m ≤ 1 annehmen. Ist die geforderte Reduzierung der Kanalkapazität größer als 1 Kanal, so werden mehrere Zustandsautomaten 80 parallel wirksam. Ein negatives Prüfungsergebnis 84, wenn für das Verfahren nicht unmittelbar relevante Plausibilitätsprüfungen dies begründen, führt zum statischen Betrieb 81 mit den Ausgangsparametern. In diesem Fall wird ein Alarmindikationssignal an den Protokollcontroller 5 gesendet. Ein positives Prüfungsergebnis 85 führt zum Zustand Phase 1 der dynamischen Kanalzuweisung 86. Der Zustand Phase 1 der dynamischen Kanalzuweisung 86 beinhaltet, daß in dem außer Betrieb zu nehmenden Kanal eine Entzugsinformation (Info 2) erwartet wird. Der Kanal wird noch mit bereits eingerichteten Kanälen gemeinsam entsprechend dem Mappingalgorithmus genutzt. Der Empfang ohne Entzugsinformation 87 (Info 2) führt wieder zum Zustand Phase 1 der dynamischen Kanalzuweisung 86. Es kann ein Übergang 88 zum statischen Betrieb 81 mit den Ausgangsparametern erfolgen, wenn für eine voreinstellbare Anzahl von Zyklen oder eine voreinstellbare Zeit keine Entzugsinformation eingetroffen oder eine eingetroffene Entzugsinformation ungültig ist. In diesen Fällen wird ein Alarmindikationssignal an den Protokollcontroller 5 gesendet. Das Eintreffen einer Entzugsinformation 89 führt zum Zustand Phase 2 der dynamischen Kanalzuweisung 90. Der Zustand Phase 2 der dynamischen Kanalzuweisung 90 beinhaltet, daß eine Quittung an die Basisstation 2 gesendet wird. Der Empfang weiterer Entzugsinformationen 91 führt wieder zum Zustand Phase 2 der dynamischen Kanalzuweisung 90 und es wird erneut eine Quittung gesendet. Die Entzugsinformationen werden beim Mappingalgorithmus ignoriert. Das Ausbleiben der Entzugsinformation 92 führt zum statischen Betrieb 81 mit den neuen Parametern. Damit wird gewährleistet, daß bei Entzug von Kanälen das Ende der Nutzdatensendung definiert ohne Datenverluste in das Mapping einbezogen ist und nicht nach Ende einer Nutzdatensendung in einem Empfänger Pseudodaten in das Mapping einbezogen werden.

### Bezugszeichenliste

- 1: Funksystem
- 2: Basisstation, Master
- 3: Teilnehmergerät, Slave
- 4: bidirektionales Interface
- 5: Protokollcontroller
- 6: Mappingbaugruppe
- 7: Datenbus
- 8: Radio-Frequency-Baugruppe
- 9: Luftschnittstelle
- 10: Multiplexer
- 11: virtuelle Verbindungsbaugruppe
- 12: Radio Frequency-Baugruppe
- 13: Mappingbaugruppe
- 14: Multiplexer
- 15: virtuelle Verbindungsbaugruppe
- 16: Teilnehmerinterfaceschaltung
- 17: Luftschnittstelle
- 20: Zustandsautomat
- 21: statischer Betrieb
- 22: Erhöhung der Kanalkapazität
- 23: Prüfen der Anweisung
- 24: negatives Prüfungsergebnis
- 25: positives Prüfungsergebnis
- 26: Phase 1 der dynamischen Kanalzuweisung
- 27: Empfang ohne Quittung
- 28: Übergang
- 29: Eintreffen einer Quittung
- 30: Phase 2 der dynamischen Kanalzuweisung
- 31: Empfang mit Quittung
- 32: Ausbleiben der Quittung
- 40: Zustandsautomat
- 41: statischer Betrieb
- 42: Erhöhung der Kanalkapazität
- 43: Prüfen der Anweisung
- 44: negatives Prüfungsergebnis
- 45: positives Prüfungsergebnis
- 46: Phase 1 der dynamischen Kanalzuweisung
- 47: Empfang ohne Zuweisungsinformation
- 48: Übergang
- 49: Eintreffen einer Zuweisungsinformation
- 50: Phase 2 der dynamischen Kanalzuweisung
- 51: Empfang weiterer Zuweisungsinformationen
- 52: Ausbleiben einer weiteren Zuweisungsinformation
- 60: Zustandsautomat
- 61: statischer Betrieb
- 62: Reduzierung der Kanalkapazität
- 63: Prüfen der Anweisung
- 64: negatives Prüfungsergebnis
- 65: positives Prüfungsergebnis
- 66: Phase 1 der dynamischen Kanalzuweisung
- 67: Empfang ohne Quittung
- 68: Übergang
- 69: Eintreffen einer Quittung
- 70: Phase 2 der dynamischen Kanalzuweisung
- 71: weiterer Empfang mit Quittungen
- 72: Ausbleiben von Quittungen
- 80: Zustandsautomat
- 81: statischer Betrieb
- 82: Reduzierung der Kanalkapazität
- 83: Prüfung der Anweisung
- 84: negatives Prüfungsergebnis
- 85: positives Prüfungsergebnis
- 86: Phase 1 der dynamischen Kanalzuweisung
- 87: Empfang ohne Entzugsinformation
- 88: Übergang
- 89: Eintreffen einer Entzugsinformation
- 90: Phase 2 der dynamischen Kanalzuweisung
- 91: Empfang weiterer Entzugsinformationen
- 92: Ausbleiben der Entzugsinformation

## Patentansprüche

1. Verfahren zur dynamischen Kanalzuweisung in Funksystemen (1), insbesondere für WLL (Wireless Local Loop) - Systeme, mittels mindestens zweier Stationen (2, 3), die jeweils als Sender und Empfänger betreibbar sind, die parallel über eine wechselnde und unterschiedliche Anzahl von Kanälen unter Verwendung eines Mappingalgorithmus kommunizieren, wofür in den Stationen (2, 3) Mappingbaugruppen (6, 13) angeordnet sind, umfassend folgende Verfahrensschritte:
a) Festlegung einer Station (2) als Master und der weiteren Station (3) als Slave,
b) Ableitung des Kanalbedarfs aus der aktuellen Datentransferlast durch den Master (3) und Berechnung neuer Kanal- und Verbindungstabellen,
c) Übertragung der neuen Kanal- und Verbindungstabellen an die Mappingbaugruppen (6, 13) des Masters (2) und des Slaves (3),
d) Aussenden eines Umkonfigurierungssignales von dem Master (2) an den Slave (3),
e) Aussenden eines Quittierungssignals von dem Slave (3) an den Master (2) nach Empfang des Umkonfigurierungssignals und
f) endgültige Vornahme der Umkonfiguration durch den Master (2) und den Slave (3), wobei das Umkonfigurierungs- und das Quittierungssignal vom Mappingalgorithmus ignoriert werden und das Umkonfigurierungs- und das Quittierungssignal sich zeitlich mit den Zuweisungs- oder Entzugsprozeduren für die Kanäle auf der Seite des Master (2) und des Slaves (3) überlappen.

2. Verfahren nach Anspruch 1, dadurch gekennzeichnet, daß in der Mappingbaugruppe (6) des Masters (2) für jeden aktiven Slave (3) genau eine virtuelle Verbindungsbaugruppe (11) existiert und in dem jeweiligen Slave (3) in der Mappingbaugruppe (13) auch genau eine virtuelle Verbindungsbaugruppe (15) existiert.

3. Verfahren nach Anspruch 1 oder 2, dadurch gekennzeichnet, daß das Verfahren der dynamischen Kanalzuweisung kanalbezogen ist, so daß bei Entzug oder Zuweisung von mehreren Kanälen das Verfahren parallel für jeden Kanal abläuft.

4. Verfahren nach einem der vorangegangenen Ansprüche, dadurch gekennzeichnet, daß bei schwankender Datentransferlast die vom Master (2) erzeugte neue Kanal- und Verbindungstabelle vor Aussendung des Umkonfigurierungssignals von den Mappingbaugruppen (6, 13) des Masters (2) und des Slaves (3) überprüft wird, ob die zugewiesenen Kanäle verfügbar oder die Verbindungskapazität ausreichend ist und bei negativem Prüfungsergebnis die neue Kanal- und Verbindungstabelle ignoriert werden und gegebenenfalls ein Alarmindikationssignal an den Master (2) übergeben wird.

5. Verfahren nach einem der vorangegangenen Ansprüche, dadurch gekennzeichnet, daß bei Ausbleiben erwarteter Signale nach einer voreinstellbaren Anzahl von Zyklen oder Zeit der Master (2) oder der Slave (3) in den Ausgangszustand zurückgehen und gegebenenfalls ein Alarmindikationssignal an den Master (2) übergeben.

6. Verfahren nach einem der vorangegangenen Ansprüche , dadurch gekennzeichnet, daß bei Reduzierung von Kanalkapazität, der außer Betrieb zu nehmende Kanal masterseitig in Senderichtung nicht mehr vom Mappingalgorithmus genutzt wird und der Master (2) über den außer Betrieb zu nehmenden Kanal ein Umkonfigurierungssignal an den Slave (3) sendet,
der Slave (3) über den außer Betrieb zu nehmenden Kanal ein Quittierungssignal an den Master (2) sendet und anschließend den Kanal sende- und empfangsseitig aus dem Mappingalgorithmus entbindet,
der Master (2) nach Empfang des Quittierungssignals den außer Betrieb zu nehmenden Kanal empfangsseitig aus dem Mappingalgorithmus entbindet und
die Mappingbaugruppen (6, 13) des Masters (2) und des Slaves (3) bei Ausbleiben weiterer Umkonfigurierungs- oder Quittierungssignale den Kanal außer Betrieb nehmen.

7. Verfahren nach einem der Ansprüche 1 bis 5, dadurch gekennzeichnet, daß bei Zuweisung von Kanalkapazität
der Master (2) über den neu zugewiesenen Kanal ein Umkonfigurierungssignal an den Slave (3) sendet, ohne den Kanal in den Mappingalgorithmus einzubinden,
der Slave (3) nach Empfang des Konfigurierungssignals ein Quittierungssignal an den Master (2) sendet und den Kanal empfangsseitig in den Mappingalgorithmus einbindet,
der Master (2) nach Empfang des Quittierungssignals den Kanal sende- und empfangsseitig in den Mappingalgorithmus einbindet und mit der Nutzdatensendung beginnt und
der Slave (3) nach Empfang der ersten Nutzdaten den Kanal auch sendeseitig in den Mappingalgorithmus einbindet.

8. Basisstation, umfassend ein mit dem Fernmeldenetz verbundenes bidirektionales Interface, eine Mappingbaugruppe und eine mit der Mappingbaugruppe verbundene RF-Baugruppe, dadurch gekennzeichnet, daß ein Protokollcontroller (5) mit dem bidirektionalen Interface (4) verbunden ist und ein Signalausgang des Protokollcontollers (5) mit den Steuereingängen der Mappingbaugruppe (6) verbunden ist.

9. Basisstation nach Anspruch 8, dadurch gekennzeichnet, daß die Mappingbaugruppe (6) netzseitig durch einen Multiplexer 10 und funkseitig durch virtuelle Verbindungsbaugruppen (11) gebildet ist.

10. Basisstation nach Anspruch 9, dadurch gekennzeichnet, daß der Signalausgang des Protokollcontrollers (5) sowohl mit den Steuereingängen des Multiplexer (10) als auch der virtuellen Verbindungsgruppen (11) der Mappingbaugruppe (6) verbunden ist.

11. Teilnehmergerät, umfassend eine funkseitig angeordnete RF-Baugruppe und eine Mappingbaugruppe, dadurch gekennzeichnet, daß die Mappingbaugruppe (13) funkseitig zur RF-Baugruppe (12) durch eine virtuelle Verbindungsbaugruppe (15) und teilnehmerseitig durch einen Multiplexer (14) gebildet ist.
